# EUROPÄISCHE PATENTSCHRIFT

(11) **EP 2 867 395 B1**
(45) Veröffentlichungstag und Bekanntmachung des Hinweises auf die Patenterteilung: **25.05.2016**
(21) Anmeldenummer: 13727144.1
(22) Anmeldetag: 05.06.2013
(51) Int. Cl.: D02G 3/48, B60C 9/00

(54) **FESTIGKEITSTRÄGERLAGE UND FAHRZEUGLUFTREIFEN**
STRENGTH SUPPORT LAYER AND PNEUMATIC VEHICLE TYRE
COUCHE DE RENFORT ET PNEUMATIQUE DE VÉHICULE

(30) Priorität: 29.06.2012 DE 102012105766
(43) Veröffentlichungstag der Anmeldung: 06.05.2015
(73) Patentinhaber: Continental Reifen Deutschland GmbH, 30165 Hannover (DE)
(72) Erfinder: REESE, Wolfgang, 31228 Peine (DE)
(74) Vertreter: Finger, Karsten
(86) Internationale Anmeldenummer: PCT/EP2013/061523
(87) Internationale Veröffentlichungsnummer: WO 2014/001039

(56) Entgegenhaltungen:
- GB-A- 1 101 015
- JP-A- H0 976 707
- JP-A- H05 195 359
- JP-A- H06 305 304
- US-A- 3 422 873

## Beschreibung

Die Erfindung betrifft eine Festigkeitsträgerlage für elastomere Erzeugnisse, wobei die Festigkeitsträger Hybridcorde sind, welche innerhalb der Lage im Wesentlichen parallel zueinander angeordnet sind und wenigstens ein Garn aus Polyester und wenigstens ein Garn aus Polyamid enthalten. Des Weiteren betrifft die Erfindung einen Fahrzeugluftreifen, der wenigstens eine erfindungsgemäße Festigkeitsträgerlage enthält.

Festigkeitsträger zur Verstärkung verschiedener elastomerer Erzeugnisse sind hinreichend bekannt. So ist für Fahrzeugluftreifen bekannt, eine Gürtelbandage zu verwenden, die ein-oder mehrlagig ausgebildet ist, die Gürtelränder abdeckt und parallel und im wesentlichen in Umfangsrichtung verlaufende Festigkeitsträger in Form von im Gummi eingebetteten Corden enthält. Diese Gürtelbandage dient dazu, insbesondere im Hochgeschwindigkeitseinsatz, eine Erhebung des Reifen durch die im Fahrbetrieb auftretenden Fliehkräfte zu verhindern.

Die Bandage wird bei der Reifenherstellung in Form von Lagen, Streifen oder Einzel-Corden mit in eine unvulkanisierte Kautschukmischung eingebetteten Festigkeitsträgern aufgebracht, die auf den Gürtel gewickelt oder gespult werden. Die Festigkeitsträger werden in Kautschuk eingebettet, indem eine Schar von im Wesentlichen parallel liegenden fadenförmigen Festigkeitsträgern, die in der Regel thermisch und/oder zur besseren Haftung am einbettenden Gummi in der der fachkundigen Person bekannten Art mit einer Imprägnierung vorbehandelt sind, in Längsrichtung einen Kalander oder einen Extruder zur Ummantelung mit der Kautschukmischung durchlaufen. Bei der Bombage mit bisher im Einsatz befindlichen Vorrichtungen und der Vulkanisation des Reifens dehnt sich der Reifen in der Regel im Schulterbereich durch die Erhebung um bis zu 2 % und im Mittenbereich um bis zu 4 % im Vergleich zum unvulkanisierten Rohling, wenn der Rohling auf einer flachen Trommel gewickelt wird. Bei neueren Aufbautrommeln wird nur noch eine geringere Dehnung während der Reifenherstellung von etwa max. 2 % gefordert. Bei moderneren Vorrichtungen ist die Erhebung geringer. Ein weiteres Problem besteht in dem Schrumpfverhalten des jeweiligen Cordmaterials bei erhöhter Temperatur. Ein geringeres Schrumpfverhalten bedingt eine höhere Dimensionsstabilität des Fahrzeugreifens und somit ein besseres, der fachkundigen Person bekanntes, Flatspotverhalten (= reversible plastische Abplattungen in der Bodenaufstandsfläche beim Parken).

Die Corde der Bandage sollen bei der Reifenherstellung eine ausreichende Erhebung bei der Bombage und in der Vulkanisationsform zulassen, damit der Reifen präzise ausgeformt werden kann, und sie sollen nach der Fertigstellung des Reifens im Fahrbetrieb eine gute Hochgeschwindigkeitstauglichkeit, d.h. eine gute Dimensionsstabilität, gewährleisten. Um diesen Anforderungen zu genügen, sollten sich die Corde bis zu einer Dehnung von ca. 3 bis 4 % mit mäßigem Kraftaufwand und ab einer höheren Dehnung nur noch mit sehr hohem Kraftaufwand dehnen lassen.

Auch für Fördergurte, Antriebsriemen, Schläuche und Luftfederbälge ist der Einsatz von Festigkeitsträgern mit auf die Anforderungen abgestimmten physikalischen Eigenschaften notwendig.

Aus der US 7,252,129 B2 ist ein Hybridcord bestehend aus Aramidfasern und einer weiteren Faser ausgewählt aus der Gruppe bestehend aus Polyester, Nylon und Rayon bekannt. Dieser Hybridkord gewährleistet eine geringere Separierung der einzelnen Fäden der Festigkeitsträgerlage.

Die EP 1 703 005 B1 beschreibt einen tauchbeschichteten Hybridcord umfassend ein Rayon und ein Lyocell-Garn, der sich durch gute Ermüdungsbeständigkeit auszeichnet.

Die DE 102005046492 A1 offenbart ein Verfahren zur Herstellung eines Garnes aus Polyester- oder Aramid-Filamenten, die für eine verbesserte Haftung von Nylon-Filamenten ummantelt sind.

In der KR 100829260 B1 und der KR 100829261 werden Hybridcorde aus PET und Nylon beschrieben, die mit 270 bis 330 t/m (330 turns per meter) miteinander endverdreht sind und mit einem zweifachen Dip behandelt sind. Hiermit werden im Vergleich zu einem einfach gedippten Cord aus Nylon eine Verringerung der Dehnung bei 45 N und eine niedrigere Schrumpfung bei 180 °C erzielt. Der Einfluss auf die Schrumpfkraft geht aus diesen Schriften nicht hervor.

Weitere Hybridcorde aus Polyester und Polyamid sind aus JP-A-H09 76 707, JP-A-H06 305 304, US-A-3 422 873, GB-A-1 101 015 und JP-A-H05 195 359 bekannt.

Eine der Aufgaben der Erfindung besteht nun darin eine Festigkeitsträgerlage für elastomere Erzeugnisse aus Hybridcorden aus wenigstens einem Garn aus Polyester und wenigstens einem Garn aus Polyamid bereitzustellen, die ein geringeres Schrumpfverhalten, eine erhöhte (verbesserte) Schrumpfkraft, und eine vergleichsweise hohe Kraft bei 2 bis 4 % Dehnung aufweist. Gleichzeitig soll das Gewicht dieser Festigkeitsträgerlage durch die Cord-Konstruktion nicht signifikant erhöht werden.

Gelöst wird die Aufgabe erfindungsgemäß durch eine Festigkeitsträgerlage für elastomere Erzeugnisse, wobei die Festigkeitsträger Hybridcorde sind, welche innerhalb der Lage im Wesentlichen parallel zueinander angeordnet sind und wenigstens ein Garn aus Polyester und wenigstens ein Garn aus Polyamid enthalten, dadurch gekennzeichnet, dass das Garn aus Polyester eine Feinheit von 1440 dtex aufweist und das Garn aus Polyamid eine Feinheit von 1400 dtex aufweist, wobei wenigstens ein Garn aus Polyester und wenigstens ein Garn aus Polyamid mit 370 t/m zu einem Hybridcord miteinander endverdreht sind.

Eine weitere Aufgabe der Erfindung besteht darin, einen Fahrzeugluftreifen bereitzustellen, der ein geringeres Schrumpfverhalten und eine höhere Dimensionsstabilität aufweist.

Gelöst wird diese Aufgabe dadurch, dass der Fahrzeugluftreifen zumindest eine Festigkeitsträgerlage für elastomere Erzeugnisse enthält, wobei die Festigkeitsträger Hybridcorde sind, welche innerhalb der Lage im Wesentlichen parallel zueinander angeordnet sind und wenigstens ein Garn aus Polyester und wenigstens ein Garn aus Polyamid enthalten, dadurch gekennzeichnet, dass das Garn aus Polyester eine Feinheit von 1440 dtex aufweist und das Garn aus Polyamid eine Feinheit von 1400 dtex aufweist, wobei wenigstens ein Garn aus Polyester und wenigstens ein Garn aus Polyamid mit 370 t/m zu einem Hybridcord miteinander endverdreht sind.

Überraschenderweise wurde gefunden, dass sich eine solche Festigkeitsträgerlage durch ein deutlich verbessertes Schrumpfverhalten und deutlich erhöhte Schrumpfkräfte auszeichnet. Zusätzlich ist es dabei gelungen, dass das Gewicht dieser Festigkeitsträgerlage nicht signifikant erhöht ist.

Im Rahmen der vorliegenden Erfindung stellen Corde linienförmige Gebilde dar, die aus zwei oder mehr miteinander verdrehten Garnen bestehen. Ein Hybridcord stellt einen Cord dar, bei dem zwei oder mehr unterschiedliche Garne miteinander verdreht sind. Ein Garn ist im Rahmen der vorliegenden Erfindung in Anlehnung an die DIN 60900 ein linienförmiges Gebilde, das aus einzelnen Filamenten oder Fasern besteht. Die Begriffe Garn aus Polyester und Polyestergarn sowie Garn aus Polyamid und Polyamidgarn werden im Rahmen der Erfindung synonym verwendet.

Ein Fahrzeugluftreifen, der wenigstens eine erfindungsgemäße Festigkeitsträgerlage in wenigstens einem Bauteil enthält, weist eine erhöhte Dimensionsstabilität, eine besonders gute Hochgeschwindigkeitstauglichkeit und ein nahezu gleiches Reifengewicht auf. Abplattungen bei Last (Flatspotting) sind stark reduziert. Bevorzugt ist die erfindungsgemäße Festigkeitsträgerlage als Gürtelbandage und/oder Wulstverstärker ausgebildet, um die genannten Vorteile zu erreichen.

Bei weniger als 340 t/m lässt die Ermüdungsbeständigkeit stark nach, was zu Cord-Brüchen führen kann. Bei mehr als 550 t/m lässt die Festigkeit stark nach, während die Prozesskosten zunehmend steigen.

Mit 370 t/m weisen die Hybridcorde der erfindungsgemäßen Festigkeitsträgerlage optimale Eigenschaften hinsichtlich der dynamischen Haltbarkeit, der Ermüdungsbeständigkeit, der Festigkeit und der Prozesskosten auf.

Bei dem Hybridcord der erfindungsgemäßen Festigkeitsträgerlage werden ein Polyestergarn und ein Polyamidgarn miteinander endverdreht. Eine derartige Cord-Konstruktion weist z.B. bei der Anwendung im Fahrzeugluftreifen die notwendige Festigkeit bei guten Hochgeschwindigkeits-, Flatspot- und Rollwiderstands-Eigenschaften auf.

Es ist im Rahmen der vorliegenden Erfindung auch denkbar, dass mehr als ein Polyestergarn und/oder mehr als ein Polyamidgarn miteinander endverdreht werden.

Das Polyestergarn der erfindungsgemäßen Festigkeitsträgerlage kann in S- und/oder in Z-Richtung verdreht sein.
Das Polyamidgarn der erfindungsgemäßen Festigkeitsträgerlage kann in S- und/oder in Z- Richtung verdreht sein.
Vorteilhafterweise weisen das Polyestergarn oder die Polyestergarne und das Polyamidgarn oder die Polyamidgarne die gleiche Drehrichtung auf. Sie sind also beide entweder in S- und/oder in Z- Richtung verdreht.

Erfindungsgemäß sind wenigstens ein Polyamidgarn und wenigstens ein Polyestergarn in S- oder in Z-Richtung zu einem Hybridcord miteinander endverdreht. Vorteilhafterweise ist die Drehrichtung zum Hybridcord der Drehrichtung der Garne entgegengesetzt.
Wären die Drehrichtungen der Garne und des Hybridcordes die gleiche, so können bei der Produktion übermäßig viele Filament-Brüche entstehen und eine ausreichende Festigkeit wäre nicht mehr gegeben.

Das Polyestergarn der erfindungsgemäßen Festigkeitsträgerlage ist ein HMLS-Polyestergam (High Modulus Low Shrinkage) und/oder ein HMHS-Polyestergarn (High Modulus High Shrinkage) und/oder ein HMNS (Regular)-Polyestergarn (High Modulus Normal Shrinkage).
Vorzugsweise wird ein HMLS-Polyestergarn und/oder ein HMNS (Regular)-Polyestergarn verwendet. Diese Garne weisen eine gute thermische Stabilität auf, wodurch sie den Anforderungen in den genannten Anwendungen gerecht werden; wie z.B. der Hochgeschwindigkeitstauglichkeit bei der Anwendung im Fahrzeugluftreifen.

Vorteilhafterweise ist der Polyester des Polyestergarns ausgewählt aus der Gruppe bestehend aus Polyethylenterephthalat (PET) und/oder Polyethylennaphthalat (PEN) und/oder Polybutylenterephthalat (PBT) und/oder Polycarbonat (PC), welches formal als Polyester betrachtet werden kann.
Bevorzugt ist die Verwendung von PEN und/oder PET, besonders bevorzugt ist die Verwendung von PET. PET weist gegenüber PEN den Vorteil auf, dass es vergleichsweise kostengünstig ist.

Handelt es sich bei dem Polyestergarn der erfindungsgemäßen Festigkeitsträgerlage um PET, so werden bevorzugt HMLS- und/oder HMNS (Regular)-PET verwendet.

Das Polyamid des Garns aus Polyamid ist ausgewählt aus der Gruppe bestehend aus Polyamid 6 (PA 6) und/oder Polyamid 66 (PA 66) und/oder Polyamid 12 (PA 12) und/oder Polyamid 11 (PA 11) und/oder Polyamid 1313 (PA 1313) und/oder Polyamid 4 (PA 4) und/oder Polyamid 7 (PA 7) und/oder Polyamid 8 (PA 8) und/oder Polyamid 9 (PA 9) und/oder Polyamid 46 (PA 46) und/oder Polyamid 610 (PA 610) und/oder Polyamid 612 (PA 612) und/oder Polyamid 69 (PA 69) und/oder Polyamid 66/6 (PA 66/6).
Bevorzugt ist die Verwendung von PA 6 und/oder PA 66, besonders bevorzugt ist die Verwendung von PA 66.

In einer bevorzugten Ausführungsform der Erfindung weist das Garn aus PET eine Feinheit von 1440 dtex auf und das Garn aus PA 66 eine Feinheit von 1400 dtex, wobei wenigstens ein PET-Garn und wenigstens ein Garn aus PA 66 mit 370 t/m zu einem Hybridcord miteinander endverdreht sind. Ein derartiger Hybridcord weist überraschend hohe Schrumpfkräfte auf.

In einer Ausführungsform nicht gemäß der Erfindung weist das Garn aus PET eine Feinheit von 1100 dtex auf und das Garn aus PA 66 eine Feinheit von 940 dtex, wobei wenigstens ein PET-Garn und wenigstens ein Garn aus PA 66 mit 410 t/m zu einem Hybridcord miteinander endverdreht sind. Ein derartiger Hybridcord weist ebenso überraschend hohe Schrumpfkräfte auf.

Um eine zuverlässige Haftung von textilen Festigkeitsträgern zum Gummi zu gewährleisten, ist es zweckmäßig, dass die Hybridcorde aus wenigstens einem Polyestergarn und wenigstens einem Polyamidgarn mit einer Haftimprägnierung zur Gewährleistung der Haftung der Festigkeitsträger zum Gummi versehen sind. Beispielsweise kann diese Haftimprägnierung mit einem RFL-Dip im 1- oder 2-Bad-Verfahren erfolgen. Es sind aber auch alle weiteren dem Fachmann bekannten Verfahren und Haftmittel zur Imprägnierung denkbar.

Die Cordfadendichte der Festigkeitsträgerlage beträgt 80 bis 180 epdm, bevorzugt 90 bis 150 epdm. Diese Dichte gewährleistet eine ausreichende Festigkeit bei der Anwendung im Fahrzeugluftreifen.

Handelt es sich bei der Festigkeitsträgerlage um eine Gürtelbandage, so ist diese in einem Winkel zwischen 0° und 5° zur Umfangsrichtung einlagig oder mehrlagig ausgebildet, wobei einlagig bevorzugt ist. Ausgebildet bedeutet in diesem Zusammenhang, dass sie in Umfangsrichtung einlagig oder mehrlagig, bevorzugt einlagig, gespult ist. Mit der erfindungsgemäßen Festigkeitsträgerlage als Gürtelbandage weist der Fahrzeugluftreifen eine besonders gute Hochgeschwindigkeitstauglichkeit auf, während Abplattungen bei Last (Flatspotting) stark reduziert sind.

Beim Einsatz der vorbeschriebenen Festigkeitsträgerlage als Wulstverstärker in einem Fahrzeugluftreifen liegt der Vorteil darin, dass dieser Festigkeitsträger einen höheren Modul als bisher üblicherweise eingesetzten Polyamidfestigkeitsträgerlagen aufweist.

Diese Vorteile werden auch bei der Verwendung der vorbeschriebenen Festigkeitsträgerlage zur Herstellung von weiteren elastomeren Erzeugnissen, wie Fördergurte, Antriebsriemen, Schläuche und Luftfederbälge erzielt.

Ein Ausführungsbeispiel und weitere Vorteile der Erfindun werden im Zusammenhang mit der nachfolgenden Tabelle 1 näher erläutert. Der Hybridcord in der Tabelle 1 stellt ein Ausführungsbeispiel der erfindungsgemäßen Festigkeitsträgerlage dar, während die Corde, die nur Polyamidgarne enthalten, sowie die Corde, die nur Polyestergarne enthalten, als Referenzen dienen.

Die Messungen wurden dabei nach den folgenden Methoden durchgeführt:
• Bruchkraft und Bruchdehnung, Kraft bei 2 % und 4% Dehnung, Dehnung bei 45 N, Schrumpfung bei 180 °C, Rest-Schrumpfung und Schrumpfkraft in Anlehnung an ASTM D 855

**Tabelle 1**

| Eigenschaft | Einheit | PA 66 ^{a)} | PET ^{b)} | Hybridcord ^{c)} |
|---|---|---|---|---|
| | | 1400x2 | 1440x2 | PET ^{b)} 1440x1/ |
| | | 390 t/m | 370 t/m | PA 66 ^{a)} 1400x1, |
| | | Endverdrehung | Endverdrehung | 370 t/m Endverdrehung |
| Bruchkraft | N | 211 | 185 | 188 |
| Dehnung bei 45 N | % | 6,6 | 3,2 | 4,5 |
| Kraft bei 2 % Dehnung | N | 15 | 32 | 24 |
| Kraft bei 4 % Dehnung | N | 24 | 52 | 41 |
| Bruchdehnung | % | 21,5 | 15,5 | 16,5 |
| Schrumpfung bei 180°C | % | 5,0 | 5,0 | 3,9 |
| Rest-Schrumpfung (%) | % | 2,3 | 4,5 | 2,5 |
| Schrumpfkraft | N | 6,8 | 4,3 | 7,2 |

| | | | | |
|---|---|---|---|---|
| ^{a)} PA 66: Nylon, PA 66-Garn Enka® Nylon 140 HRT, Fa. Polyamid High Performance: Drehrichtung Z; Cord PA 66 1400x2 Drehrichtung S ^{b)} HMNS (Regular)-PET: PET- Garn 1384A, Fa. Halide: Drehrichtung Z; Cord PET 1440x2 Drehrichtung S ^{c)} PET- und PA 66-Garn Drehrichtung Z, Hybridcord PET 1440x1/PA 66 1400x1 Drehr. S | | | | |

Tabelle 1 ist zu entnehmen, dass der erfindungsgemäße Hybridcord HMNS (Regular)-PET 1440x1/PA 66 1400x1 eine deutlich höhere Kraft bei 4 % Dehnung und eine überraschend hohe Schrumpfkraft aufweist, die höher ist, als die von PA 66 und die von HMNS (Regular)-PET ist. Dieser überraschende synergistische Effekt war nicht zu erwarten, da man bei einem Hybridcord aus zwei Materialien davon ausgehen würde, dass die Werte für die Eigenschaften sich zwischen den Werten der Corde aus den einzelnen Materialien bewegen. Das überraschenderweise deutlich verbesserte Schrumpfverhalten des Hybridcordes ergibt im Fahrzeugluftreifen eine erhöhte Dimensionsstabilität sowie eine verbesserte Hochgeschwindigkeitstauglichkeit.

**Tabelle 2**

| Eigenschaft | Einheit | PA 66 ^{d)} | PET ^{e)} | Hybridcord ^{f)} |
|---|---|---|---|---|
| | | 940x2 | 1100x2 | PET ^{e)} 1100x1/ |
| | | 350 t/m | 410 t/m | PA 66 ^{d)} 940x1 |
| | | Endverdrehung | Endverdrehung | 410 t/m Endverdrehung |
| Bruchkraft | N | 150 | 154 | 135 |
| Dehnung bei 45 N | % | 7,8 | 4,8 | 4,3 |
| Kraft bei 2 % Dehnung | N | 13 | 26 | 22 |
| Kraft bei 4 % Dehnung | N | 20 | 40 | 42 |
| Bruchdehnung | % | 20,6 | 15,0 | 16,5 |
| Schrumpfung bei 180°C | % | 5,0 | 2,0 | 4,7 |
| Rest-Schrumpfung (%) | % | 2,5 | 1,8 | 3,4 |
| Schrumpfkraft | N | 4,5 | 1,9 | 7,1 |

| | | | | |
|---|---|---|---|---|
| ^{d)} PA 66: Nylon, PA 66-Garn Enka^{®} Nylon 140 HRT, Fa. Polyamid High Performance: Drehrichtung Z; Cord PA 66 940x2 Drehrichtung S ^{e)} HMLS-PET, HMLS-PET-Garn SK20A, Fa. Shinkong: Drehrichtung Z; Cord PET 1100x2 Drehrichtung S ^{f)} PET- und PA 66-Garn Drehrichtung Z; Hybridcord PET 1 100x1/PA 66 940x1 Drehr. S | | | | |

Tabelle 2 ist zu entnehmen, dass der nicht erfindungsgemäße Hybridcord
HMLS-PET 1100x1/PA 66 940x1 auch eine deutlich höhere Kraft bei 4 % Dehnung und eine überraschend hohe Schrumpfkraft aufweist, die höher sind, als die von PA 66 und die von HMLS-PET ist. Dieser überraschende synergistische Effekt war nicht zu erwarten. Das überraschenderweise deutlich verbesserte Schrumpfverhalten des Hybndcordes ergibt im Fahrzeugluftreifen eine erhöhte Dimensionsstabilität sowie eine verbesserte Hochgeschwindigkeitstauglichkeit.

## Patentansprüche

1. Festigkeitsträgerlage für elastomere Erzeugnisse, wobei die Festigkeitsträger Hybridcorde sind, welche innerhalb der Lage im Wesentlichen parallel zueinander angeordnet sind und wenigstens ein Garn aus Polyester und wenigstens ein Garn aus Polyamid enthalten, **dadurch gekennzeichnet, dass** das Garn aus Polyester eine Feinheit von 1440 dtex aufweist und das Garn aus Polyamid eine Feinheit von 1400 dtex aufweist, wobei wenigstens ein Garn aus Polyester und wenigstens ein Garn aus Polyamid mit 370 t/m zu einem Hybridcord miteinander endverdreht sind.

2. Festigkeitsträgerlage nach Anspruch 1, **dadurch gekennzeichnet, dass** es sich bei dem Polyester um Polyethylenterephthalat (PET) handelt.

3. Festigkeitsträgerlage nach Anspruch 1, **dadurch gekennzeichnet, dass** es sich bei dem Polyester um Polyethylennaphthalat (PEN) handelt.

4. Festigkeitsträgerlage nach einem der Ansprüche 1 bis 3, **dadurch gekennzeichnet, dass** es sich bei dem Polyamid um Polyamid 66 (PA 66) handelt.

5. Festigkeitsträgerlage nach einem der Ansprüche 1 bis 4, **dadurch gekennzeichnet, dass** die Hybridcorde mit einer Haftimprägnierung zur Gewährleistung der Haftung der Festigkeitsträger zum Gummi versehen sind.

6. Fahrzeugluftreifen, enthaltend zumindest eine Festigkeitsträgerlage nach einem der Ansprüche 1 bis 5.

7. Fahrzeugluftreifen nach Anspruch 6, **dadurch gekennzeichnet, dass** die Festigkeitsträgerlage als Gürtelbandage und/oder Wulstverstärker ausgebildet ist.

## Claims

1. Strength member ply for elastomeric articles of manufacture, wherein the strength members are hybrid cords which form an essentially parallel arrangement within the ply and contain at least one polyester yarn and at least one polyamide yarn, **characterized in that** the polyester yarn has a fineness of 1440 dtex and the polyamide yarn has a fineness of 1400 dtex, while at least one polyester yarn and at least one polyamide yarn are cabled together at 370 t/m to form a hybrid cord.

2. Strength member ply according to Claim 1, **characterized in that** the polyester comprises polyethylene terephthalate (PET).

3. Strength member ply according to Claim 1, **characterized in that** the polyester comprises polyethylene naphthalate (PEN).

4. Strength member ply according to any of Claims 1 to 3, **characterized in that** the polyamide comprises nylon-6,6 (PA 66).

5. Strength member ply according to any of Claims 1 to 4, **characterized in that** the hybrid cords are provided an adhesive impregnation to ensure adherence of the strength members to the rubber.

6. Pneumatic vehicle tyre containing at least one strength member ply according to any of Claims 1 to 5.

7. Pneumatic vehicle tyre according to Claim 6, **characterized in that** the strength member ply is configured as belt bandage and/or bead reinforcer.

## Revendications

1. Couche de renfort pour articles élastomères, les renforts étant des câbles hybrides qui sont agencés essentiellement en parallèle les uns aux autres dans la couche et contiennent au moins un fil en polyester et au moins un fil en polyamide, **caractérisée en ce que** le fil en polyester présente une finesse de 1 440 dtex et le fil en polyamide présente une finesse de 1 400 dtex, au moins un fil en polyester et au moins un fil en polyamide étant vrillés aux extrémités à 370 t/m pour former un câble hybride.

2. Couche de renfort selon la revendication 1, **caractérisée en ce que** le polyester est le polyéthylène téréphtalate (PET).

3. Couche de renfort selon la revendication 1, **caractérisée en ce que** le polyester est le polyéthylène naphtalate (PEN).

4. Couche de renfort selon l'une quelconque des revendications 1 à 3, **caractérisée en ce que** le polyamide est le polyamide 66 (PA 66).

5. Couche de renfort selon l'une quelconque des revendications 1 à 4, **caractérisée en ce que** les câbles hybrides sont munis d'une imprégnation adhésive pour assurer l'adhérence du renfort au caoutchouc.

6. Pneumatique de véhicule, contenant au moins une couche de renfort selon l'une quelconque des revendications 1 à 5.

7. Pneumatique de véhicule selon la revendication 6, **caractérisé en ce que** la couche de renfort est configurée sous la forme d'un bandage de ceinture et/ou d'un renfort de talon.
